# EUROPEAN PATENT SPECIFICATION

(11) **EP 2 077 685 B1**
(45) Date of publication and mention of the grant of the patent: **29.12.2010**
(21) Application number: 08100043.2
(22) Date of filing: 03.01.2008
(51) Int. Cl.: H04W 16/32

(54) **Co-channel operation of submacrocells with restricted access**
Nachbarkanalbetrieb von Submakrozellen mit beschränktem Zugang
Opération à canaux communs de sous-macrocellules avec accès restreint

(43) Date of publication of application: 08.07.2009
(73) Proprietor: Alcatel-Lucent USA Inc., Murray Hill, NJ 07974-0636 (US)
(72) Inventor: Claussen, Holger, Swindon, Wiltshire SN5 3NJ (GB); Ho, Lester, Swindon, Wiltshire SN5 5GD (GB)
(74) Representative: Schmidt, Werner Karl

(56) References cited:
- EP-A- 1 313 338
- WO-A-98/07290
- LI-CHUN WANG ET AL: "Architecture Design, Frequency Planning, and Performance Analysis for a Microcell/Macrocell Overlaying System" IEEE TRANSACTIONS ON VEHICULAR TECHNOLOGY, IEEE SERVICE CENTER, PISCATAWAY, NJ, US, vol. 46, no. 4, 1 November 1997 (1997-11-01), XP011063644 ISSN: 0018-9545
- RAPPAPORT S S ET AL: "MICROCELLULAR COMMUNICATION SYSTEMS WITH HIERARCHICAL MACROCELL OVERLAYS: TRAFFIC PERFORMANCE MODELS AND ANALYSIS" PROCEEDINGS OF THE IEEE, IEEE. NEW YORK, US, vol. 82, no. 9, 1 September 1994 (1994-09-01), pages 1383-1397, XP000199837 ISSN: 0018-9219
- HOLGER CLAUSSEN ED - ANONYMOUS: "Performance of Macro and Co-Channel Femtocells in a Hierarchical Cell Structure" PERSONAL, INDOOR AND MOBILE RADIO COMMUNICATIONS, 2007. PIMRC 2007. IE EE 18TH INTERNATIONAL SYMPOSIUM ON, IEEE, PI, 1 September 2007 (2007-09-01), pages 1-5, XP031168593 ISBN: 978-1-4244-1143-6

## Description

The invention relates to cellular radio communication, in particular to a method for co-channel operation of at least one macrocell and a submacrocell located in the at least one macrocell, and to a corresponding radio communication system.

In cellular radio communications systems, the area of radio coverage is subdivided into macrocells. Each macrocell is served by a base station located in the macrocell. The macrocell may be operated on a single frequency channel or on a plurality of frequency channels.

For increasing the network's capacity and coverage, smaller sized cell may be established within the macrocells. Such smaller sized cells may be microcells, picocells or femtocells. In the application the term submacrocell is used for such smaller sized cells. A submacrocell may be provided only for covering a building, an office or only the home, e.g., in case of a user deployed femtocell.

The document "Performance of Macro- and Co-Channel Femtocells in a Hierarchical Cell Structure", H. Claussen, IEEE International Symposium on Personal, Indoor and Mobile Radio Communications (PIMRC'07), September 2007, describes the co-channel operation of macrocells and femtocells deployed in the coverage area of the macrocells. The femtocells and the macrocells share a single frequency channel. The document demonstrates that the co-channel deployment of femtocells with an existing macrocellular network can significantly increase the spectral efficiency per area for a shared frequency channel. To achieve a continuous coverage, the analysis in the document assumes that the femtocells are publicly accessible such as the macrocells that operate on the shared frequency channel.

Femtocells typically use a broadband Internet Protocol connection (e.g., a DSL connection) for backhaul. The public accessibility is regarded by many operators as a drawback since this implies that the internet backhaul that is provided by the femtocell owner is also used by other users of the cellular network. This may result in some legal issues, in particular in case the internet backhaul is provided by a different operator than the operator of the cellular network. In addition, there are security concerns when providing a privately owned open access point, e.g., the femtocell owner may have access to the communication data of other users of the cellular network.

For overcoming these drawbacks related to public accessibility of femtocells, access to the femtocells may be restricted to authorized user terminals only, e.g., to family members or employees of an office. However, in case of co-channel operation, such restricted access may result in coverage holes. Such a coverage hole may occur for an unauthorized user terminal in the close proximity of the femtocell base station (e.g., for a user terminal used by a visitor of the femtocell owner), which is not allowed to connect via the femtocell but suffers interference originating from the femtocell, which operates in the same frequency channel.

Further, for overcoming the problem of coverage holes caused by the femtocell base stations, one may use separate frequency channels for the macrocells and the femtocells, e.g., one exclusive frequency channel for all macrocells and one exclusive frequency channel for all femtocells. However, such exclusive use of one or more frequency channels for the femtocells reduces the number of available frequency channels for the macrocell network and thus the capacity of the macrocellular network. This is even worse in areas where the macrocell network is highly loaded.

Prior art document EP 1 313 338 Al discloses frequency allocation for macrocells and public-access microcells. From a plurality of available frequencies, one frequency is shared by both the macrocell and microcell layers. One frequency is exclusively allocated to the microcell layer, and one frequency is exclusively allocated to the macrocell layer. The shared frequency channel allows "soft" handover between the macrocell layer and the microcell layer without change of the used frequency band.

The document "Architecture Design, Frequency Planning, and Performance Analxis for a Microcell/Macrocell Overlaying System", Li-Chun Wang et al., IEEE Transactions on Vehicular Technology, Vol. 46, No. 4, November 1997 presents a hierarchical microcell/macrocell architecture. Here, underlaid microcells reuse the same frequencies as overlaying macrocells.

There is a need to provide a method for operating macrocells and submacrocells and to provide a corresponding radio communication system which overcome the above mentioned problems.

This is achieved by a method for co-channel operation and a radio communication system according to the independent claims. The dependent claims refer to preferred embodiments of the invention.

A first aspect of the invention relates to a method for co-channel operation of at least one macrocell of a cellular radio communication system and a submacrocell, in particular a femtocell, located in the at least one macrocell. The submacrocell is non-accessible for unauthorized user terminals.

According to the inventive method, co-channel operation of at least one macrocell and the submacrocell in combination with restricted access to the submacrocell is possible, without facing problems due to a coverage hole caused by the submacrocell. This is achieved by allocating multiple available frequency channels judiciously:
All available frequency channels (e.g., two frequency channels) are allocated to the at least one macrocell. E.g., two available frequency channels are allocated to one macrocell surrounding the submacrocell and operating on both frequency channels or the plurality of available frequency channels is allocated to two separate macrocells each surrounding the submacrocell and each operating on a different frequency channel.

When allocating all available frequency channels to the macrocell network, the submacrocell does not use any exclusive frequency channel. Thus, the capacity of the macrocell network is maximized.

Only a subset of all available frequency channels is allocated to the submacrocell for co-channel operation, i.e., the submacrocell uses only part of the frequency channels.

The inventive method comprises the step of handover a user terminal not authorized to access the submacrocell and served via the at least one macrocell on a frequency channel of the subset of frequency channels to one of the available frequency channels, which is not part of the subset of frequency channels, when the user terminal encounters a coverage hole induced by the submacrocell.

The inventive method overcomes the problem of a coverage hole around the submacrocell base station since the submacrocell is covered by the macrocell network on one the available frequency channels, which is not part of the subset of frequency channels allocated to the submacrocell. E.g., it is assumed that a user terminal is served via the at least macrocell on one frequency channel of the subset of frequency channels which is shared with the submacrocell. In case this user terminal comes close to the submacrocell base station and encounters a coverage hole induced by the submacrocell, a transfer to a different available frequency channel not shared with the submacrocell may be initiated. In the different frequency channel the submacrocell does not cause interference.

Also, the inventive method overcomes the problem that for co-channel operation, the submacrocell may suffer from high uplink interference when the submacrocells is located far away from the macrocell base station and an active macrocell-served user terminal is in close proximity. This is because the user terminal has a high transmit power. In this case, the user terminal may handover to a different frequency channel not used by the submacrocell. Thus, the submacrocell can operate without interference from the user terminal.

Further, by reusing one or more frequency channels of the at least one macrocell also for the submacrocell instead of providing an exclusive frequency channel for the submacrocell, the number of available frequency channels for the macrocell network is not reduced in spite of the deployment of the submacrocell. Thus, the macrocell capacity is not negatively affected.

In addition, due to the usage of a submacrocell, the spectral efficiency for each shared frequency channel is increased compared to a cellular network only comprising macrocells.

Finally, due to the restricted access to the submacrocell, said drawbacks in connection with public access are overcome.

Thus, the inventive method allows an operator to deploy private access femtocells without reducing the number of available frequency channels and without reducing the capacity for the macrocell traffic. Further, the invention enables the re-use of frequency channels for femtocell usage, thereby increasing the spectral efficiency per area significantly.

It should be noted that the term frequency channel is not limited to one frequency band. E.g., a frequency channel may comprise two frequency bands, one frequency band for uplink and one frequency for downlink, as in the case UMTS-FDD (Universal Mobile Telecommunications System - Frequency Division Duplex). In this case, the inventive allocation of the frequency channel may be performed both for uplink and downlink or only for a single direction.

According to a preferred embodiment of the invention, the method is for operating a plurality of submacrocells located at different places and located in the at least one macrocell. The same shared subset of frequency channels is allocated to each of the submacrocells. This reduces the signaling due for frequency channel handover when a macrocell-served user terminal is moving and visits the vicinity of various submacrocell base stations. Due to using the same shared subset of frequency channels, the same "clean" frequency channel not affected by a submacrocell may be continuously used for macrocellular service.

Alternatively, all frequency channels of the plurality of frequency channels used by the at least one macrocell may be re-used by the submacrocells, i.e., the plurality of available frequency channels is allocated to the submacrocells. However, the complete re-use is distributed over the various locations of the submacrocells, i.e., a respective subset (which is not identical for each of the submacrocells) of the plurality of frequency channel is allocated to each of the submacrocells. This increases the spectral efficiency of the submacrocellular network. However, this measure results in more signaling when a macrocell-served user terminal is moving and the frequency channel has to be changed when visiting various submacrocells.

A further embodiment not claimed in the present claims addresses the problem of the high amount of core network signaling as a result of moving user terminals that come in the coverage area of a submacrocell base station (e.g., for handovers during actual communication or for idle mode mobility events). The amount of core network signaling can be reduced by allocating macrocell-served user terminals in dependency of their level of movement to the various frequency channels of the plurality of available frequency channels. Preferably, in dependency of the level of movement the users are allocated either to a "dirty" frequency channel (which is also allocated to the submacrocell) or to a "clean" frequency channel (which is not allocated to the submacrocell). I.e., in dependency on its level of movement a macrocell-served user terminal may be allocated to a frequency channel of the subset of frequency channels used by the submacrocell or to a frequency channel, which is not part of the subset of frequency channels used by the submacrocell. In this case, a macrocell-served non-static user, i.e. a mobile user, is allocated to a "clean" frequency channel not part of the subset of frequency channels allocated also to the submacrocell. The "clean" frequency channel provides a good signal quality so that less handover (during active communication) and idle mode mobility events (e.g., change of the allocated frequency channel) arc triggered. A static user terminal does not cause this problem and can therefore be served via a "dirty" frequency channel. Thus, preferably a macrocell-served static user terminal is allocated to a frequency channel which is also shared by the submacrocell.

The concept of allocation of users to the various frequency channels may be also applied in case of publicly accessible submacrocells.

Preferably, initially user terminals are allocated to one or more "clean" frequency channels, i.e., to one or more frequency channels which are not part of the subset of frequency channels used by the submacrocell. In dependency on the used capacity of the "clean" frequency channels, static user terminals are allocated later to one or more "dirty" frequency channels being also used by the submacrocell.

The proposed user allocation to frequency channels based on mobility can significantly reduce the core network signaling for networks where a large number of femtocells are deployed in macrocellular network coverage.

A second aspect of the invention relates to a radio communication system comprising at least one macrocell operating on a plurality of available frequency channels. Further, the system comprises a submacrocell located in the at least one macrocell. The access to the submacrocell is restricted and the submacrocell co-channel operates on a subset of the plurality of available frequency channels. The features of this system correspond to the features of the method according to the first aspect of the invention. Thus, the above remarks relating to the method according to the first aspect of the invention and its preferred embodiments are basically also applicable to the system.

Another embodiment not claimed in the claims relates to a method for co-channel operation of at least one macrocell and a submacrocell on a subset of OFDM (orthogonal frequency division multiplexing) subchannels and a corresponding radio communication system. The basic idea of the first aspect of the invention and its embodiments as discussed above is analogously applicable for sharing OFDM subchannels, e.g., in a 3GPP LTE (Long Term Evolution) system as an enhancement of the UMTS standard. This allows co-channel use of parts of the available spectrum, thereby leaving a portion of the OFDM subchannels "clean" to serve macrocell-served user terminals that would suffer from high interference from a submacrocell to which they have no access rights.

The invention is explained below in an exemplary manner with reference to the accompanying drawings, wherein
- Fig. 1: illustrates a macrocell and femtocells located therein with a co-channel operation according to an embodiment of inventive method; and
- Fig. 2: illustrates the allocation of frequency channels to macrocells and femto- cells and the allocation of macrocell-served users to the macrocell fre- quency channels.

One aspect of the invention is that submacrocells, in particular femtocells use only part of the available frequency channels, which are used by macrocells.

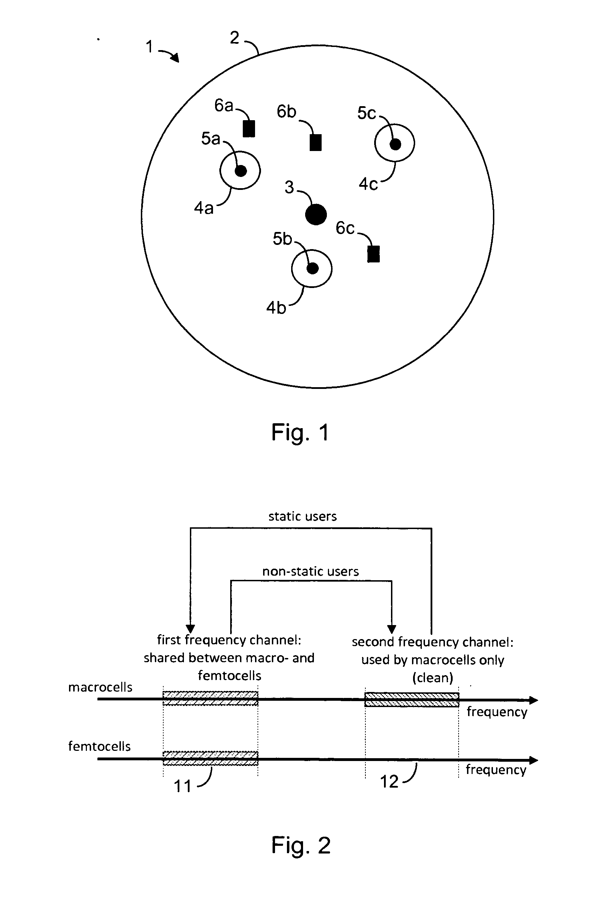

Fig. 1 illustrates a cellular radio communication system 1, e.g., a UMTS system, having a plurality of macrocells. In Fig. 1 only a single macrocell 2 serving (during active communication or during idle mode) user terminals 6a, 6b, 6c is shown. The macrocell 2 is served by a base station 3 located in the macrocell 2 and providing radio coverage within the macrocell 2. Within the macrocell 2, a plurality of femtocells 4a, 4b, 4c is located, each served by a respective femtocell base station 5a, 5b, 5c. Compared to the macrocell base station 3, each femtocell base station 5a, 5b, 5c has a relatively low transmit power, resulting in a much smaller coverage area of each femtocell 4a, 4b, 4c. E.g., the femtocells base stations 5a, 5b, 5c are provided only for covering the home of the respective femtocell owner. Further, the femtocells 4a, 4b, 4c are private access femtocells only accessible for a respective list of user terminals specified by the respective femtocell owner. It is assumed that the femtocells 4a, 4b, 4c are not accessible for the unauthorized user terminals 6a, 6b, 6c.

In the following it is further assumed that two frequency channels are available and both are used for the macrocellular coverage. In this example the reuse factor of the frequency channels is 1, i.e., both frequency channels are used at the same location of the macrocellular network.

Both frequency channels are allocated to the macrocell 2, i.e., the macrocell base station 3 operates on both frequency channels. Alternatively, one may regard the macrocell 2 covering both frequency channels as a combination of two overlapping macrocells (in particular identically overlapping) each using a different frequency channel and being served by a different macrocell base station.

The problem of coverage hole for macrocell-served user terminals 6a, 6b, 6c, which are not authorized to access the co-channel operated femtocells 4a, 4b, 4c, is solved by a judicious use of the two frequency channels as will be explained in the following.

The femtocells 4a, 4b, 4c use only part of the available frequency channels and all frequency channels are used by the macrocells.

Only the first of the two frequency channels is allocated to the femtocells 4a, 4b, 4c for co-channel operation, i.e., only one of the two frequency channels is re-used for femtocell deployment. Thus, there is always one "dirty" frequency channel that is used by both the macrocell 2 and the femtocells 4a, 4b, 4c, resulting in a high femtocell interference for macrocell-served user terminals 6a, 6b, 6c in the vicinity of the femtocell base stations 5a, 5b, 5c. Further, there exists also one "clean" frequency channel, here the second frequency channel, with no femtocell interference. By providing one "clean" frequency channel the problem of coverage holes is solved. This is because a macrocell-served user terminal 6a, 6b, 6c can always handover to the "clean" first frequency channel when coming too close to one of the femtocell base stations 5a, 5b, 5c, to which the user terminal 6a, 6b, 6c has no access rights. In addition, the spectral efficiency per area is significantly improved by the co-channel operation. The spectral efficiency scales linearly with the number of co-channel femtocells. The total throughput within the area of the macrocell 2 can be increased by several orders of magnitude dependent on the number of femtocells deployed in the area. Nevertheless, all frequency channels are still available for macrocell traffic.

In contrast to allocating the first frequency channel to all femtocells 4a, 4b, 4c, one may re-use both frequency channels for the femtocells 4a, 4b, 4c as long as each femtocell 4a, 4b, 4c uses only one of the two frequency channels. E.g., the femtocells 4a and 4c may use the first frequency channel, whereas the femtocell 4b uses the second frequency channel. This approach also results in a "clean" frequency channel with no or only low interference at any location within the macrocell. However, this approach implies also an increased amount of core network signaling when a macrocell-served user terminal is moving within the macrocell 2 as described in the following.

A further aspect of the invention addresses the problem of the high amount of core network signaling as a result of macrocell-served moving user terminals that come in the coverage area of the femtocells base stations 5a, 5b, 5c (e.g., for handover events during actual communication, or due to idle mode mobility events, in particular for changing the frequency channel in idle mode). A large amount of core network signaling can be avoided when allocating users either to a shared or "dirty" frequency channel (here: the first frequency channel) or to a "clean" frequency channel (here: the second frequency) in dependency on their mobility. Mobile macrocell-served users should be served via the "clean" second frequency channel (which is not allocated to the femtocells 4a, 4b, 4c), which provides a good signal quality, with the result that less handover and idle mode mobility events are triggered. Static macrocell-served users do not cause this problem and can therefore be served via the shared "dirty" first frequency channel (which is also allocated to the femtocells 4a, 4b, 4c). This approach solves the problem of high frequency user-mobility related signaling.

Ideally, the "clean" second frequency channel is loaded up first, i.e., the user terminals 6a, 6b, 6c are allocated to second frequency channel, which is not allocated to the femtocells 4a, 4b, 4c. If the user demand increases beyond the capacity of the "clean" second frequency channel, static users are transferred to the "dirty" first frequency channel, which is also allocated to the femtocells 4a, 4b, 4c. If e.g. the user terminal 6a is a static user terminal, the user terminal 6a is reallocated to the "dirty" first frequency channel. Alternatively, the transfer of users from the "clean" second frequency channel to the "dirty" first frequency channel can also be carried out before the capacity of the "clean" second frequency channel is reached, e.g., when a particular portion of the capacity is used. Thereby, a set small amount of "buffer" capacity can be maintained. This guarantees a set amount of capacity of the "clean" second frequency channel as a backup for macrocell-served users when required.

Various criterions may be used alternatively or in combination for distinguishing non-static user terminals from static user terminals, e.g., the size of the Doppler shift; the change of channel estimates; the change of the neighbor list or the length of time without mobility events. E.g., when measuring the change of channel estimates, e.g., the change of channel estimates to femtocells may be measured.

Fig. 2 illustrates the allocation of both frequency channels 11, 12 to the macrocells and fcmtocells and the allocation of the macrocell-served user terminals to the macrocell frequency channels. The first 11 and second 12 available frequency channels arc allocated to the macrocells 2. Only the first frequency channel 11 is allocated to the femtocells 4a, 4b, 4c. Static users, e.g., the user of user terminal 6a, are allocated to the "dirty" first frequency channel 11. In case, the static user terminals are served via the second frequency channel 12, the static user terminals are transferred to the first frequency channel 11. Non-static users, e.g., the users of user terminals 6b, 6c, are allocated to the "clean" second frequency channel 12. In case, the non-static user terminals are served via the first frequency channel 11, the static user terminals are transferred to the second frequency channel 12. It should be noted that the frequency channels 11 and 12 each may comprise two frequency bands, one frequency band for uplink and one frequency band for downlink. In this case, the inventive allocation of the frequency channels to the macro- and femtocells and the inventive allocation of the users to the frequency channels may be performed both for uplink and downlink or only for one direction.

Instead of transferring static macrocell users to the "dirty" first frequency channel 11 and the non-static macrocell users to the "clean" second frequency channel 12, a simpler approach is to transfer users that are currently on the "dirty" first frequency channel 11 to the "clean" second frequency channel 12 on a need-to basis, i.e., in case a user encounters a femtocell induced coverage hole and requires a handover. The allocation of the "clean" second frequency channel 12 may be operated like a first-in-first-out (FIFO) queue: the user that has been on the "clean" second frequency channel 12 the longest will be moved to the "dirty" first frequency channel 11 if the used capacity of the "clean" second frequency channel 12 approaches the limit or reaches a particular threshold. This is a straightforward approach and ensures that the "clean" second frequency channel 12 is used most often. However, in contrast to the other approach, this approach may result in more handovers between the frequency channels.

Instead of using only two available frequency channels, the inventive principle may be also applied in case of more than two available frequency channels. In this case, all frequency channels are used by the macrocellular network. Each femtocell 4a, 4b, 4c re-uses a subset of the frequency channels, preferably the same subset of frequency channels. If said technique for reducing the core network signaling as described above is applied, preferably, the fractional size of the reusable subset of frequency channels should be related to the fraction of the static users in the network. In particular, the fraction of the subset of frequency channels may correspond to the average fraction of the static user terminals. E.g., in case on average 30 % of all frequency channels are sufficient to serve user terminals that are non-static (during active and idle mode), 70 % of the macrocell frequency channels may be re-used by co-channel femtocells.

As discussed before, a further option is to re-use all frequency channels of the underlay macrocellular network by a femto- or picocellular overlay network but not at the same location to further increase the spectral efficiency of the femto- or picocellular overlay network. With respect to Fig. 1, e.g., the femtocells 4a and 4c may use the first frequency channel, whereas the femtocell 4b uses the second frequency channel. However, this option would result in more mobility signaling due to often re-allocation of a mobile user to a different macrocell frequency channel, in particular in case of deployment of femtocells. However, this option may be advantageous to increase the spectral efficiency of a picocellular network with private access where due to the increases cell size and due to the coverage of such areas where a large portion of the users have access (e.g., business areas), the resulting mobility procedures happen less often.

## Claims

1. A method for co-channel operation of at least one macrocell (2) of a cellular radio communication system (1) and a submacrocell (4a-c) located in the at least one macrocell (2), the submacrocell (4a-c) being non-accessible for unauthorized user terminals (6a-c) served by the cellular radio communication system (1), the method comprising the steps of:
- allocating all available frequency channels (11, 12) to the at least one macrocell (2);
- allocating only a subset (11) of all available frequency channels to the submacrocell (4a-c) for co-channel operation; and
- handover a user terminal (6a-c) not authorized to access the submacrocell (4a-c) and served via the at least one macrocell (2) on a frequency channel (11) of the subset of frequency channels to one (12) of the available frequency channels, which is not part of the subset of frequency channels, when the user terminal encounters a coverage hole induced by the submacrocell (4a-c).

2. The method of claim 1, wherein the method is for operating a plurality of submacrocells (4a-c) and the same subset (11) of frequency channels is allocated to each of the submacrocells (4a-c).

3. The method of claim 1, further comprising the step of:
- allocating a macrocell-served user terminal (6a-c) to
o a frequency channel (11) of the subset of frequency channels or
o to a frequency channel (12) of the available frequency channels, which is not part of the subset of frequency channels,
in dependency on the level of movement of the user terminal (6a-c).

4. The method of claim 3, wherein the step of allocating the user terminal (6a-c) comprises the steps of:
- in case of a static user terminal, allocating the user terminal to a frequency channel (11) of the subset of frequency channels; and
- in case of a non-static user terminal, allocating the user terminal to a frequency channel (12) of the available frequency channels, which is not part of the subset of frequency channels.

5. The method of claim 3, wherein the step of allocating the user terminal (6a-c) comprises the steps of:
- allocating the user terminal (6a-c) to a frequency channel (12) of the available frequency channels, which is not part of the subset (11) of frequency channels;
- in case of a static user terminal, re-allocating the user terminal (6a-c) to a frequency channel (11) of the subset of frequency channels, with the step of reallocating being carried out in dependency on the used capacity of one or more frequency channels (12) not being part of the subset (11) of frequency channels.

6. The method of claim 3, wherein the level of movement of the user terminal (6a-c) is determined based on one or more of the criterions:
- the size of the Doppler shift;
- the change of channel estimates;
- the change of the neighbor-list; and
- the length of time without mobility events.

7. The method of claim 3, wherein a fraction of the subset (11) of available frequencies is related to a fraction of static user terminals.

8. The method of claim 1, wherein the method is for operating a plurality of submacrocells (4a-c) and all available frequency channels (11, 12) are allocated to the submacrocells (4a-c), with only a respective subset of the plurality of frequency channels being allocated to each of the submacrocells (4a-c).

9. The method of claim 1, wherein the submacrocell is a femtocell (4a-c).

10. A radio communication system (1) comprising:
- one or more macrocells (2) operating on all available frequency channels (11, 12);
- a submacrocell (4a-c) located in the one or more macrocells (2), the submacrocell being non-accessible for unauthorized user terminals (4a-c) served by the radio communication system (1) and the submacrocell (4a-c) co-channel operating on a subset (11) of all available frequency channels (11, 12); and
- means for handover a user terminal (6a-c) not authorized to access the submacrocell (4a-c) and served via a macrocell (2) on a frequency channel (11) of the subset of frequency channels to one (12) of the available frequency channels, which is not part of the subset of frequency channels, when the user terminal encounters a coverage hole induced by the submacrocell (4a-c).

## Patentansprüche

1. Ein Verfahren für den Nachbarkanalbetrieb von mindestens einer Makrozelle (2) eines zellulären Funkkommunikationssystems (1) und einer in der mindestens einen Makrozelle (2) angeordneten Submakrozelle (4a-c), wobei die Submakrozelle (4a-c) nicht für von dem zellulären Funkkommunikationssystem (1) bediente unberechtigte Benutzerendgeräte (6a-c) zugänglich ist, wobei das Verfahren die folgenden Schritte umfasst:
- Zuweisen aller verfügbaren Frequenzkanäle (11, 12) an die mindestens eine Makrozelle (2);
- Zuteilen nur einer Teilmenge (11) aller verfügbaren Frequenzkanäle an die Submakrozelle (4a-c) für den Nachbarkanalbetrieb; und
- Weiterreichen eines Benutzerendgeräts (6a-c), welches nicht für den Zugang zu der Submakrozelle (4a-c) berechtigt ist und über die mindestens eine Makrozelle (2) auf einem Frequenzkanal (11) der Teilmenge von Frequenzkanälen bedient wird, an einen (12) der verfügbaren Frequenzkanäle, welcher nicht der Teilmenge von Frequenzkanälen angehört, wenn das Benutzerendgerät auf ein von der Submakrozelle (4a-c) verursachtes Abdeckungsloch trifft.

2. Das Verfahren nach Anspruch 1, wobei das Verfahren für den Betrieb einer Mehrzahl von Submakrozellen (4a-c) bestimmt ist und dieselbe Teilmenge (11) von Frequenzkanälen an eine jede der Submakrozellen (4a-c) zugewiesen wird.

3. Das Verfahren nach Anspruch 1, weiterhin den folgenden Schritt umfassend:
- Zuweisen eines von einer Makrozelle bedienten Benutzerendgeräts (6a-c) an
o einen Frequenzkanal (11) der Teilmenge von Frequenzkanälen oder
o an einen Frequenzkanal (12) der verfügbaren Frequenzkanäle, welcher nicht der Teilmenge von Frequenzkanälen angehört,
in Abhängigkeit von der Bewegungsebene des Benutzerendgeräts (6a-c).

4. Das Verfahren nach Anspruch 3, wobei der Schritt des Zuweisens des Benutzerendgeräts (6a-c) die folgenden Schritte umfasst:
- Im Fall eines statischen Benutzerendgeräts, Zuweisen des Benutzerendgeräts an einen Frequenzkanal (11) der Teilmenge von Frequenzkanälen; und
- im Fall eines nicht-statischen Benutzerendgeräts, Zuweisen des Benutzerendgeräts an einen Frequenzkanal (12) der verfügbaren Frequenzkanäle, welcher nicht der Teilmenge von Frequenzkanälen angehört.

5. Das Verfahren nach Anspruch 3, wobei der Schritt des Zuweisens des Benutzerendgeräts (6a-c) die folgenden Schritte umfasst:
- Zuweisen des Benutzerendgeräts (6a-c) an einen Frequenzkanal (12) der verfügbaren Frequenzkanäle, welcher nicht der Teilmenge (11) von Frequenzkanälen angehört;
- im Fall eines statischen Benutzerendgeräts, Neuzuweisen des Benutzerendgeräts (6a-c) an einen Frequenzkanal (11) der Teilmenge von Frequenzkanälen, wobei der Schritt des Neuzuweisens abhängig von der benutzten Kapazität eines oder mehrerer des Frequenzkanäle (12), welche nicht der Teilmenge (11) von Frequenzkanälen angehören, durchgeführt wird.

6. Das Verfahren nach Anspruch 3, wobei die Bewegungsebene des Benutzerendgeräts (6a-c) auf der Basis eines oder mehrerer der folgenden Kriterien bestimmt wird:
- Die Größe der Dopplerverschiebung;
- die Veränderung der Kanalschätzungen;
- die Veränderung der Nachbarliste; und
- die Dauer ohne Mobilitätsereignisse.

7. Das Verfahren nach Anspruch 3, wobei ein Teil der Teilmenge (11) von verfügbaren Frequenzen auf einen Teil der statischen Benutzerendgeräte bezogen ist.

8. Das Verfahren nach Anspruch 1, wobei das Verfahren für den Betrieb einer Mehrzahl von Submakrozellen (4a-c) bestimmt ist und alle verfügbaren Frequenzkanäle (11, 12) an Submakrozellen (4a-c) zugewiesen werden, wobei nur eine jeweilige Teilmenge der Mehrzahl von Frequenzkanälen an eine jede der Submakrozellen (4a-c) zugewiesen wird.

9. Das Verfahren nach Anspruch 1, wobei die Submakrozelle eine Femtozelle (4a-c) ist.

10. Ein Funkkommunikationssystem (1), umfassend:
- Eine oder mehrere Makrozellen (2), welche auf allen verfügbaren Frequenzkanälen (11, 12) betrieben werden ;
- eine Submakrozelle (4a-c), welche in der einen oder mehreren der Makrozellen (2) angeordnet ist, wobei die Submakrozelle nicht für unberechtigte Benutzerendgeräte (6a-c), die von dem Funkkommunikationssystem (1) bedient werden, zugänglich ist, und wobei die Submakrozelle auf einer Teilmenge (11) aller verfügbaren Frequenzkanäle (11, 12) in Nachbarkanalbetrieb arbeitet; und
- Mittel zum Weiterreichen eines Benutzerendgeräts (6a-c), welches keine Zugangsberechtigung für die Submakrozelle (4a-c) hat und über die Makrozelle (2) auf einem Frequenzkanal (11) der Teilmenge von Frequenzkanälen bedient wird, ist, an einen (12) der verfügbaren Frequenzkanäle, welcher nicht der Teilmenge von Frequenzkanälen angehört, wenn das Benutzerendgerät auf ein von der Submakrozelle (4a-c) verursachtes Abdeckungsloch trifft.

## Revendications

1. Procédé de fonctionnement sur un canal commun d'au moins une macrocellule (2) d'un système de radiocommunication cellulaire (1) et d'une macrocellule secondaire (4a-c) qui se trouve dans l'au moins une macrocellule (2), la macrocellule secondaire (4a-c) n'étant pas accessible aux terminaux d'utilisateur (6a-c) non autorisés desservis par le système de radiocommunication cellulaire (1), le procédé comprenant les étapes suivantes :
- affectation de tous les canaux de fréquence (11, 12) disponibles à l'au moins une macrocellule (2) ;
- affectation d'un sous-ensemble (11) seulement de tous les canaux de fréquence disponibles à la macrocellule secondaire (4a-c) pour le fonctionnement sur un canal commun ; et
- transfert d'un terminal d'utilisateur (6a-c) non autorisé à accéder à la macrocellule secondaire (4a-c) et desservi par le biais de l'au moins une macrocellule (2) sur un canal de fréquence (11) du sous-ensemble de canaux de fréquence à l'un (12) des canaux de fréquence disponibles qui ne fait pas partie du sous-ensemble de canaux de fréquence lorsque le terminal d'utilisateur rencontre un trou de couverture induit par la macrocellule secondaire (4a-c).

2. Procédé selon la revendication 1, dans lequel le procédé est destiné au fonctionnement d'une pluralité de macrocellules secondaires (4a-c) et le même sous-ensemble (11) de canaux de fréquence est affecté à chacune des macrocellules secondaires (4a-c).

3. Procédé selon la revendication 1, comprenant en outre l'étape suivante :
- affectation d'un terminal d'utilisateur (6a-c) desservi par la macrocellule à
o un canal de fréquence (11) du sous-ensemble de canaux de fréquence ou
o un canal de fréquence (12) des canaux de fréquence disponibles qui ne fait pas partie du sous-ensemble de canaux de fréquence, en fonction du niveau de mobilité du terminal d'utilisateur (6a-c).

4. Procédé selon la revendication 3, dans lequel l'étape d'affectation du terminal d'utilisateur (6a-c) comprend les étapes suivantes :
- dans le cas d'un terminal d'utilisateur statique, affectation du terminal d'utilisateur à un canal de fréquence (11) du sous-ensemble de canaux de fréquence ; et
- dans le cas d'un terminal d'utilisateur non statique, affectation du terminal d'utilisateur à un canal de fréquence (12) parmi les canaux de fréquence disponibles qui ne fait pas partie du sous-ensemble de canaux de fréquence.

5. Procédé selon la revendication 3, dans lequel l'étape d'affectation du terminal d'utilisateur (6a-c) comprend les étapes suivantes :
- affectation du terminal d'utilisateur (6a-c) à un canal de fréquence (12) parmi les canaux de fréquence disponibles qui ne fait pas partie du sous-ensemble (11) de canaux de fréquence ;
- dans le cas d'un terminal d'utilisateur statique, réaffectation du terminal d'utilisateur (6a-c) à un canal de fréquence (11) du sous-ensemble de canaux de fréquence, l'étape de réaffectation étant exécutée en fonction de la capacité utilisée d'un ou plusieurs canaux de fréquence (12) ne faisant pas partie du sous-ensemble (11) de canaux de fréquence.

6. Procédé selon la revendication 3, dans lequel le niveau de mobilité du terminal d'utilisateur (6a-c) est déterminé en se basant sur un ou plusieurs des critères suivants :
- le niveau de dérive Doppler ;
- le changement d'estimation du canal ;
- le changement de la liste des voisins ; et
- la durée sans événements de mobilité.

7. Procédé selon la revendication 3, dans lequel une fraction du sous-ensemble (11) des fréquences disponibles est en rapport avec une fraction des terminaux d'utilisateur statiques.

8. Procédé selon la revendication 1, dans lequel le procédé est destiné au fonctionnement d'une pluralité de macrocellules secondaires (4a-c) et tous les canaux de fréquence (11, 12) disponibles sont affectés aux macrocellules secondaires (4a-c), seul un sous-ensemble correspondant de la pluralité de canaux de fréquence étant affecté à chacune des macrocellules secondaires (4a-c).

9. Procédé selon la revendication 1, la macrocellule secondaire étant une femtocellule (4a-c).

10. Système de radiocommunication (1) comprenant :
- une ou plusieurs macrocellules (2) fonctionnant à tous les canaux de fréquence disponibles (11, 12) ;
- une macrocellule secondaire (4a-c) qui se trouve dans l'une ou les plusieurs macrocellules (2), la macrocellule secondaire n'étant pas accessible aux terminaux d'utilisateur (4a-c 6a-c) non autorisés desservis par le système de radiocommunication cellulaire (11), et la macrocellule secondaire (4a-c) fonctionnant en canal commun sur un sous-ensemble (11) de tous les canaux de fréquence disponibles (11, 12) ; et
- moyens pour transférer un terminal d'utilisateur (6a-c) non autorisé à accéder à la macrocellule secondaire (4a-c) et desservi par le biais d'une macrocellule (2) sur un canal de fréquence (11) du sous-ensemble de canaux de fréquence à l'un (12) des canaux de fréquence disponibles qui ne fait pas partie du sous-ensemble de canaux de fréquence lorsque le terminal d'utilisateur rencontre un trou de couverture induit par la macrocellule secondaire (4a-c).
